# EUROPEAN PATENT APPLICATION

(11) **EP 4 631 815 A1**
(43) Date of publication of application: **15.10.2025**
(21) Application number: 24169000.7
(22) Date of filing: 08.04.2024
(51) Int. Cl.: B60W 40/12

(54) **METHOD AND SYSTEM FOR PROVIDING AN ADAPTIVE TIRE MODEL AND VEHICLE**

(71) Applicant: Rimac Technology LLC, 10431 Sveta Nedelja (HR)
(72) Inventor: Pérez Fernández, Javier, 29071 Málaga (ES)
(74) Representative: Sonnenberg Harrison Partnerschaft mbB

(57) **Abstract**

A method for providing an adaptive tire model for controlling a vehicle and/or for providing tire-related information of the vehicle, the method comprising the steps of: estimating (S 1) a series of data points of forces and slips of a tire of the vehicle based on vehicle sensor data; penalizing (S2) and/or excluding (S3) data points having a predefined dynamic behaviour and/or an accuracy being lower than a predefined threshold from the series of data points to provide an adapted series of data points; normalizing (S4) the adapted series of data points to provide a normalized series of data points; compressing (S5) the normalized series of data points to provide a compressed series of data points; and fitting (S6) the compressed series of data points with a predefined tire model to obtain the adaptive tire model.

## Description

### FIELD OF THE INVENTION

The present invention relates to a method for providing an adaptive tire model for controlling a vehicle and/or for providing tire-related information of the vehicle.

The present invention also relates to a system for providing an adaptive tire model for controlling a vehicle and/or for providing tire-related information of the vehicle.

The present invention also relates to a vehicle controller.

The present invention also relates to a vehicle having at least two tires and such a vehicle controller or such a system.

### BACKGROUND OF THE INVENTION

In the evolving landscape of automotive technology, the quest for enhanced vehicle motion control has spotlighted the critical role of tire modeling. Advanced model-based controllers, such as Model Predictive Control (MPC), leverage intricate models of vehicle dynamics and tire characteristics to predict and optimize vehicle behavior. The cornerstone of these predictive systems is the tire model's accuracy, which significantly influences the overall performance and safety of the control mechanism.

Traditionally, tire models have been static, equipped with fixed parameters designed to account for external variables like load, speed, and grip. Yet, these conventional models often fall short in capturing the complex and unpredictable nature of tire-road interactions, highlighting a gap in our ability to adapt to real-time driving conditions.

The standard practice of offline tire fitting - using test bench data to define a tire's mathematical model - does not translate well to the real-world need for adaptive, online updates due to prohibitive computational demands and the requirement for static conditions. This disconnect underscores a pressing technical challenge: the development of a tire model that can evolve with the driving environment, enhancing the predictability and reliability of vehicle control systems.

Current technological solutions inadequately address this challenge. There lacks a hybrid model capable of selectively updating based on real-time tire data, a strategy that could balance the need for adaptability with computational feasibility. Furthermore, existing methods tend to indiscriminately process data into opaque, black-box models, introducing safety risks due to unpredictable outputs and undermining the robustness of vehicle control. Other attempts to enrich tire modeling through additional sensors - measuring aspects like tire sidewall deflection or internal temperature - introduce complexity and cost, without fundamentally solving the core issues.

Against this background, it is an objective of the present invention to provide an improved method and/or system for providing an adaptive tire model.

### SUMMARY OF THE INVENTION

The objective is achieved by a method having the features of claim 1. The objective is further achieved by a system having the features of claim 14. The objective is further achieved by a vehicle having the features of claim 15.

In a first aspect, there is presented a method for providing an adaptive tire model for controlling a vehicle, preferably in high-dynamic driving maneuvers, and/or for providing tire-related information of the vehicle, the method comprising the steps of: estimating a series of data points of forces and slips of a tire of the vehicle based on vehicle sensor data; penalizing and/or excluding data points having a predefined dynamic behavior and/or an accuracy being lower than a predefined threshold from the series of data points to provide an adapted series of data points; normalizing the adapted series of data points to provide a normalized series of data points; compressing the normalized series of data points to provide a compressed series of data points; and fitting the compressed series of data points with a predefined tire model to obtain the adaptive tire model.

In a second aspect, there is presented a system for providing an adaptive tire model for controlling a vehicle, preferably in high-dynamic driving maneuvers, and/or for providing tire-related information of the vehicle, the system comprising: an estimator unit configured for estimating a series of data points of forces and slips of a tire of the vehicle based on vehicle sensor data; a penalizer unit configured for penalizing and/or excluding data points having a predefined dynamic behavior and/or an accuracy being lower than a predefined threshold from the series of data points to provide an adapted series of data points; a normalizer unit configured for normalizing the adapted series of data points to provide a normalized series of data points; a compressing unit configured for compressing the normalized series of data points to provide a compressed series of data points; and a fitting unit configured for fitting the compressed series of data points with a predefined tire model to obtain the adaptive tire model.

The aspects presented for the method also apply for the presented system. Also, the aspects presented for the system, apply for the presented method.

The presented method describes a method for creating an adaptive tire model to enhance vehicle control, particularly during high-dynamic driving maneuvers, and to furnish tire-related information. This method involves several sequential steps, utilizing vehicle sensor data to refine the tire model iteratively for improved accuracy and relevance in real-time conditions.

The method preferably comprises estimating a series of data points related to the forces acting on the tire and the slip conditions (the speed difference between the tire and the contact surface). These data points may be derived from the vehicle's sensor data, which may monitor various parameters such as speed, acceleration, and possibly other parameters indicative of tire behavior. The estimation of the series of data points may thus include forces and slips estimation, wherein a state estimation and/or an observer-based estimation may be used to estimate the forces and slips preferably directly from standard vehicle onboard sensors.

From this series, data points that exhibit predefined dynamic behaviors or have accuracy lower than a predetermined threshold are either penalized or excluded entirely. This step ensures that only high-quality, relevant data contributes to the model, enhancing its reliability and accuracy. In other worlds, estimates with high dynamics or poor accuracy may be removed or may be penalized from the set of data points.

The refined series of data points is then normalized. "Normalization" may be a process of scaling data points to a standard range or distribution, which facilitates comparison and analysis by removing units of measurement and differing scales. This step makes the subsequent analysis more straightforward and effective. The normalization may include adaptation and/or scaling of force and/or slip estimates, especially for known tire behavior dependencies compensation.

After normalization, the data series is compressed. "Compression" involves reducing the size of the data set to make it more manageable and efficient to process, while still retaining the essential information required for the model. This could involve techniques like principal component analysis (PCA) or other data reduction strategies. The compression of the series of data points is stored in a data buffer with learning and forgetting rates.

This compressed and processed series of data points is fitted to a predefined tire model to produce the adaptive tire model. This fitting process adjusts the parameters of the tire model so that it accurately reflects the observed behaviors and conditions of the tire, as derived from the actual vehicle data. The predefined tire model can be initialized to improve the fitting procedure. This can be done by refitting the Pacejka formulation of a .tir file to the predefined tire model. The data fitting may also comprise applying nonlinear regression of compress buffers that are used for data compression. In the step of model updating, preferably initial and fitted parameters are used.

By the method, an adaptive tire model is achieved that can dynamically adjust to varying conditions, providing enhanced control for the vehicle, especially in scenarios requiring high dynamics, and offering accurate, real-time tire-related information without the need for additional sensors or data beyond what is gathered through existing vehicle sensors.

Thus, by means of the provided method, a dynamically adaptive mathematical model is defined, preferably for each individual tire of the vehicle while driving. Thereby, especially online data fitting of tire forces and slips is used to determine the parameters of the herein proposed model.

It shall be noted that to control the motion of a vehicle, a full vehicle tire model is required. Thereby, usually, the main problem in existing tire models is the change in tire adhesion due to road conditions, wear and/or temperature while driving, as this requires constant updates to adjust tire model and thus, a controller's actuation.

According to the present method, adaptations of a predefined tire model are used to reduce computational costs. Thereby, data compression, adaptation and penalization are tuned to properly extract information from the sensor data to update the tire model. In other words, there is provided a model that may update the tire-related information while driving.

The provided method is preferably based on a hybrid model containing an online-adaptive tire model part and an offline tire model part. The offline tire model part may use manufacture tire data to initialize a predefined tire model for known tire behavior dependencies. The online tire model part may be based on the online fitting of the predefined tire model and is preferably used for unknown dependencies of the tire behavior. The online tire model part is preferably implemented sequentially. Thereby, especially due to the hybrid approach, the accuracy of the overall tire model can be improved.

The sensor data are preferably provided by at least one vehicle sensor. At least one vehicle sensor herein means one or more vehicle sensors. The vehicle sensors may comprise multiple different types of vehicle sensors measuring multiple different types of vehicle behaviors and/or tire behaviors and/or vehicle motion behavior(s).

The tire-related information of the vehicle that are provided according to the method and/or the system may contain information about tire behaviors. The tire-related information may be used to inform a driver of the vehicle and/or a vehicle maintenance service about, e.g., a tire degradation or the like.

Preferably, some tire data used by the fitting procedure are estimated, since such tire data may not be measured directly. Thereby, it may be noted that tire model requires the forces (vertical, longitudinal and lateral forces of the tire) at the point of contact of the tire with the road surface. Additionally, the tire model requires the slips (slip rate and slip angle).

It shall be noted that especially during fast maneuvers of the vehicle, the tire data may be distorted by an effect of a relaxation length. To model only stationary tire regime, for which the tire model is designed, the tire data with fast dynamics may have to be removed from the fitting procedure. In other words, when fitting the tire model during high dynamic maneuvers, it may be preferable to eliminate force estimates that are related to the tire behavior during fast slip changes. Thereby, the force estimated during these changes may not be generated by adhesion effects (temperature, pressure, wear), but rather by forces delayed due to rapid changes in slip. Thus, in high-dynamic situations, such as track driving, relaxation length, and combined tire effects appear, interlocking the force- and slip-related tire behaviors. Therefore, the tire data may need to be fitted simultaneously, especially taking into account physical interdependencies.

This removal is presently done by applying a penalty factor that may be calculated for each data point to evaluate its dynamics. Thereby, thresholds may be used. Such thresholds may be based on a first derivative of the tire data. In addition or alternatively, low speed and/or acceleration-related data points may be penalized as such data points may represent poor estimates.

It shall be noted that during tire usage, different adhesion levels are obtained from the tire due to rubber contact with the road surface, such as, asphalt. The presented tire model may not only consider adhesion between the tire and the surface of the tire with the road surface but also parameters that are related to a tire construction.

According to the presented method, preferably, no additional tire sensors, such as temperature sensors and/or pressure sensors and/or wear sensors may be required. In known methods, the tire models may rely on such additional sensor information as in normal driving conditions, there may not be enough vehicle acceleration present to obtain accurate force estimates. Thus, to gather sufficient tire-related information for a tire model, additional sensors may have to be installed directly on the tire carcass. Such additional sensors may be expensive, are not standard in vehicles and may not be reliable enough for the further data processing. Also, such additional tire sensors may require specific calibration and/or maintenance.

Instead, the provided method may work with sensor data that are provided only by on-board sensors, such as an IMU sensor and/or a SWA sensor and/or a brake pressure sensor.

An IMU sensor (Inertial Measurement Unit) is a device that measures and reports a vehicle's specific acceleration, angular rate, and preferably the magnetic field surrounding the vehicle, using a combination of accelerometers and gyroscopes, and sometimes magnetometers. IMUs are preferable for determining a vehicle's acceleration, orientation, and gravitational forces, supporting functionalities like stability control, navigation, and motion tracking.

A SWA sensor (Steering Wheel Angle Sensor) measures the angle of the steering wheel and, in some systems, the rate at which the wheel is turned. The data from the SWA sensor may be used for systems like Electronic Stability Control (ESC), Adaptive Cruise Control (ACC), and Lane Keeping Assist (LKA), as it may provide real-time information about the driver's steering inputs and the vehicle's intended direction.

A brake pressure sensor measures the hydraulic pressure in the brake lines. This information may be used to assess how hard the driver is pressing on the brake pedal, which is vital for advanced braking systems like Anti-lock Braking System (ABS), Electronic Brakeforce Distribution (EBD), and emergency braking assistance.

In another aspect, the series of data points of forces and slips comprises vertical forces and longitudinal forces and lateral forces at a point of contact of the tire with a road surface and a slip rate and a slip angle of the tire.

"Vertical forces" may refer to the forces acting perpendicular to the road surface at the tire's point of contact. Vertical forces may be used for understanding the load on each tire, which can significantly affect tire grip, wear, and overall vehicle stability.

"Longitudinal forces" are the forces acting in the direction of the tire's travel at the point of tire contact with the road. Longitudinal forces are primarily associated with acceleration and braking actions, influencing the tire's ability to transmit power to the road or to slow the vehicle down effectively.

"Lateral forces" act perpendicular to the tire's direction of travel but within the plane of the road surface. These lateral forces are key to understanding and predicting the tire's behavior during cornering, affecting the vehicle's handling and stability.

"Slip rate" (also related to longitudinal slip) is a measure of the difference between the tire's rotational speed and the vehicle's actual travel speed. It is a parameter for assessing the efficiency of power transmission from the tire to the road, particularly during acceleration and braking.

"Slip angle" is the angle between the direction that the tire is pointing and the actual direction the tire is moving on the road surface. Slip angle helps in understanding the tire's cornering behavior and its ability to generate lateral forces.

In another aspect, the vehicle sensor data comprise motor torque sensor data of an engine/motor control unit and/or wheel speed sensor data of a wheel speed sensor and/or suspension sensor data of a suspension sensor and/or inertial measurement unit sensor data of an inertial measurement unit, IMU, and/or electric power assisted steering sensor data of an electric power assisted steering, EPAS, sensor.

The vehicle sensor data may also comprise tire temperature sensor data of a temperature sensor and/or tire pressure sensor data of a pressure sensor and/or tire wear-related sensor data.

"Motor torque sensor data of an engine/motor control unit" may refer to data that provides information about the torque being delivered by the engine /motor(s) to the drivetrain, which is preferable for electric and/or hybrid and/or combustion vehicles. The motor torque sensor data may be measured for a combustion-based vehicle. In combustion vehicles, the motor torque sensor data may be provided by a dynamometer or may be measured by measured based on other engine input and/or output parameters.

"Wheel speed sensor data of a wheel speed sensor" provide a measure of the rotational speed of each wheel. This information may be useable for numerous systems, including anti-lock braking systems (ABS), traction control systems (TCS), and electronic stability programs (ESP). It helps in detecting wheel slip and can be used to infer vehicle speed and acceleration.

"Suspension sensor data of a suspension sensor" is provided by monitoring various parameters related to the vehicle's suspension system, such as ride height, suspension travel, and damping forces. This data is helpful for understanding how the vehicle's body moves in relation to the wheels, affecting ride comfort, handling, and the dynamic load on each tire.

"Inertial measurement unit sensor data of an inertial measurement unit (IMU) " encompasses measurements of the vehicle's acceleration in different directions and its rate of rotation around various axes.

"Electric power assisted steering sensor data of an electric power assisted steering (EPAS) sensor" provide data related to the steering effort and direction, including the amount of assistance provided by the electric power steering system. This information helps in understanding steering behavior.

In another aspect, the estimating comprises: estimating vertical forces based on the suspension sensor data and/or the inertial measurement unit sensor data; and/or estimating longitudinal forces based on the motor sensor torque data and/or the inertial measurement unit sensor data; and/or estimating lateral forces based on the EPAS sensor data and/or the inertial measurement unit sensor data; and/or estimating longitudinal slip rate and/or lateral slip angle based on the EPAS sensor data and/or the wheel speed sensor data and/or the inertial measurement unit sensor data.

It shall be understood that there is a correspondence between the longitudinal friction of the tire (µₓ = Fₓ/F_{z}) and the lateral friction (µ_{y} = F_{y}/F_{z}) with the corresponding slips.

For estimating vertical forces, data from the suspension sensor can be used, which can provide information about suspension compression and extension, indicative of the load on each wheel and the resulting vertical forces. Additionally or alternatively, data from the Inertial Measurement Unit (IMU) may be used, which measures the vehicle's acceleration in all three axes, allowing for the inference of changes in vertical load distribution due to acceleration, deceleration, and uneven road surfaces.

For estimating longitudinal forces, motor torque sensor data may be used, directly correlating the torque output from the engine/motor(s) to the longitudinal forces at the wheels, crucial for understanding traction and braking dynamics. Additionally or alternatively, IMU sensor data may be used, as longitudinal acceleration or deceleration measurements provide insights into the forces along the vehicle's direction of travel.

For estimating lateral forces, data from the Electric Power Assisted Steering (EPAS) sensor may be used, which offers insights into steering inputs and, by extension, the lateral forces generated during cornering or evasive maneuvers. Additionally or alternatively, IMU sensor data can complement this by providing measurements of lateral acceleration, further detailing the lateral dynamics experienced by the vehicle.

For estimating longitudinal slip rate and lateral slip angle, EPAS sensor data may be used, which, through steering angle and effort, contributes to understanding the vehicle's intended versus actual path, aiding in the calculation of lateral slip angles. Additionally or alternatively, wheel speed sensor data may be used for calculating the longitudinal slip rate by comparing rotational wheel speed to vehicle speed, identifying discrepancies indicative of slip. The IMU sensor, through its detailed acceleration and rotational rate data, may support the estimation of both longitudinal slip rates and lateral slip angles by offering a view of the vehicle's motion and orientation relative to its trajectory.

In another aspect, the penalizing comprises calculating a penalty factor for each data point of the series of data points to evaluate the respective dynamic behavior of the tire based on at least one threshold that is predefined based on a value of the series of data points and/or a derivative of the series of data points; and/or penalizing data points corresponding to a low speed and/or a low acceleration of the vehicle and thereby having a respective accuracy being lower than the predefined threshold.

This penalization process aims to evaluate and adjust the influence of each data point on the model based on its dynamic behavior and the accuracy of the information it provides.

The "calculating a penalty factor for each data point" may involve assessing the dynamic behavior of the tire for each data point in the series. The assessment may be based on predefined thresholds that are determined by either a value of the series of data points or a derivative of the series (e.g., the rate of change of the data points over time). This penalty factor may serve as a measure of the data point's reliability or relevance in representing tire dynamics under various conditions.

The "evaluating dynamic behavior based on predefined thresholds" may be evaluated against these thresholds to identify data points that may not accurately reflect the tire's performance. The thresholds may be set based on the analysis of the data points and/or their derivatives, aiming to distinguish between data points that are indicative of consistent tire behavior and those that may be outliers or less reliable due to transient or non-representative conditions.

The "penalizing data points corresponding to low speed and/or low acceleration" may be associated with low vehicle speeds or low acceleration are specifically targeted for penalization. The rationale behind this is that at lower speeds or accelerations, the forces and dynamics acting on the tire can be significantly different from those at higher speeds or accelerations, potentially leading to inaccuracies in modeling tire behavior. These conditions may be associated with lower accuracy in reflecting the tire's performance due to the reduced dynamic range and the subtler interplay of forces.

The "ensuring data accuracy meets a predefined threshold" may aim at ensuring that the remaining data points, after penalization, meet a certain level of accuracy as defined by the predefined threshold. Data points that result in a respective accuracy below this threshold may either be penalized or potentially excluded from further analysis, focusing the model development on more reliable and representative data.

In another aspect, the predefined tire model is based on a multi-variable tire model, preferably a Pacejka tire model, from which a predefined number of variables are used for the model fitting.

"Multi-variable tire model" may refer to that the adaptive tire model is based on a complex, multi-variable tire model. Such models take into account various factors that influence tire behavior, including forces, torques, slip angles, slip ratios, and the characteristics of the tire-road interaction. These models are designed to accurately represent the non-linear dynamics of tires under a wide range of conditions.

Specifically, the Pacejka tire model is used that is also known as the Magic Formula tire model. The Pacejka model is a renowned and widely used tire model in vehicle dynamics simulations. It is favored for its ability to accurately describe the complex relationship between the slip condition of a tire (both longitudinal and lateral) and the forces generated at the tire-road interface. The model is characterized by a series of equations that describe the tire behavior with a high level of accuracy across different operating conditions.

To initialize the predefined Pacejka model (or any chosen multi-variable model) the parameters should be extracted from the manufacturer tire data. To reduce the computational cost, a modified Pacejka tire model formulation may be used to extract known variables dependencies from the main Pacejka model formulation (such as: combined slip, load, speed, pressure, or temperature) using fewer parameters. Preferably, a scale factor is calculated for each of these variables and applied to the tire data to normalize them.

According to the presented method, a predefined number of parameters is used for online model fitting. Thereby, the underlying adaptation process may involve selecting a predefined number of parameters from the multi-variable tire model for the online fitting process. Therefore, the online fitting process may only retain information of unknown variables (such as: road type and/or tire wear). Thus, the presented method uses prior knowledge of the tire to model complex tire behavior with the addition of an online fit for the unknowns. This approach allows for a tailored model that focuses on the most critical aspects of tire behavior for the particular vehicle dynamics and control objectives being addressed.

Thereby, the industry-standard tire model represented by the Pacejka formulation in a .tir file may be used, providing a wealth of information about tire behavior. The presented method thereby uses most parameters from the .tir file and aims only at fitting a predefined number of model parameters, preferably related to overall adhesion and/or stiffness effects of the tire. Thus, the tire construction data from the .tir file is mostly maintained. This is useful for using the presented method as an industrial standard.

The provided partial fitting the full tire model requires less computational effort. Furthermore, as the full and complex tire model is used overall, but only a few model parameters are fitted according to the presented method, the baseline obtained from the test bench using the .tir file can be maintained.

In another aspect, normalizing comprises extracting variable dependencies between the variables of the multi-variable tire model; calculating scale factors for at least some of the variables based on at least one of the variable dependencies; and normalizing the adapted series of data points based on the scale factors to compensate the variable dependencies.

The "extracting variable dependencies" may involve identifying and understanding how the variables within the tire model are interrelated. Variable dependencies refer to the ways in which one variable's behavior can influence or is correlated with the behavior of another. In the context of tire models, such dependencies might include how changes in tire load influence tire slip, or how tire pressure affects tire deformation and, consequently, the contact patch size. Extracting these dependencies is helpful for accurately modeling tire behavior, as it allows for a more nuanced understanding of how variables interact within the system.

The "calculating scale factors" based on the extracted variable dependencies is performed for at least some of the variables. These scale factors may be determined based on the nature and strength of the identified dependencies among the variables. The purpose of these scale factors may be to adjust the magnitude of the variables in a way that reflects their interdependencies, ensuring that the model can accurately predict tire behavior under a wide range of conditions.

The "normalizing the adapted series of data points" may adjust the data points for the variables of interest according to the scale factors, effectively compensating for the variable dependencies. This is done to create a dataset where the influence of inter-variable dependencies is accounted for, thereby improving the accuracy and reliability of the tire model.

This normalization process is preferable for the development of an adaptive tire model that can accurately predict tire behavior across different operating conditions. By addressing variable dependencies through normalization, the model becomes more robust and capable of providing precise control and feedback for vehicle dynamics applications.

In another aspect, the compressing comprises separating the normalized series of data points into lateral-related and longitudinal-related data of the tire; compressing the separated series of data points into a look-up table to map the corresponding friction values (µₓ = Fx/Fz; µy = Fy/Fz) into discrete slip values (κ; α); and optionally applying a forgetting factor to avoid compressing and/or adjusting of non-actual force and/or slip values.

Preferably, the normalized series of data points is divided into two distinct categories: those related to lateral forces and behaviors (lateral-related data) and those related to longitudinal forces and behaviors (longitudinal-related data). This separation may be done because lateral and longitudinal dynamics of a tire involve different mechanisms and effects and treating them separately allows for more accurate modeling and prediction of tire behavior.

The "compression into a look-up table" may be performed to effectively map friction values to discrete slip values for both lateral (µ_{y} = F_{y}/F_{z}) and longitudinal (µₓ = Fₓ/F_{z}) components. Here, µₓ and µ_{y} represent the friction coefficients in the longitudinal and lateral directions, respectively, with Fₓ and F_{y} denoting the longitudinal and lateral forces, and F_{z} representing the vertical force or load on the tire. The slip values (κ for longitudinal slip/slip rate; α for slip angle) are discretized, facilitating efficient retrieval and use in calculations. This step transforms the continuous spectrum of data points into a manageable, discrete set of values that can still accurately represent tire behavior.

The preferable application of a forgetting factor is an optional step in the compression process. This forgetting factor is used to selectively prioritize recent or more relevant data points over older or potentially less relevant ones. In other words, since not all slip values are updated at the same rate, a forgetting factor may be introduced to avoid fitting old data. Usually, high slip data are only generated in extreme maneuvers, but they provide reliable information to update the model. The forgetting factor may then be used to obtain high slip event information but removing these values after a predefined amount of time.

By doing so, the model can dynamically adjust to reflect the most current understanding of tire behavior, thereby avoiding the inclusion or undue influence of outdated or less accurate force and slip values in the model's predictions. This process enhances the model's ability to provide accurate, real-time predictions of tire dynamics, crucial for advanced vehicle control systems.

It shall be understood that usually, high slip data are only generated in extreme maneuvers, but they may provide reliable information to update the tire model. The forgetting factor may then be used to obtain high slip event information but removing these values / high slip data after a predefined and/or preset amount of time.

The term "non-actual" may be understood as "old" data/values. Thus, the "forgetting factor" may be based on or set by how "old" / "non-actual" the data is. For example, if the data (comprising force and/or slip values) is too old, it may be removed or "forgotten" by applying the forgetting factor. The forgetting factor can thus be understood as a time lapsing factor that may remove certain data or data that fulfill a certain time-dependent criteria from the data set.

In another aspect, the fitting comprises applying a nonlinear regression on the compressed series of data points to fit at least one of the parameters of the predefined tire model to the compressed series of data points; and updating the predefined tire model based on the at least one fitted parameter, the at least one fitted parameter preferably represents effects of adhesion and/or stiffness of the tire.

The "applying nonlinear regression" may involve performing nonlinear regression on the compressed series of data points. Nonlinear regression is a form of regression analysis where observational data is modeled by a function that is a nonlinear combination of the model parameters and depends on one or more independent variables. The aim here is to fit the model to the data as closely as possible by adjusting the model's parameters. Thereby, the regression may be applied to at least one of the variables within the predefined tire model. This indicates a targeted approach, focusing on specific aspects or behaviors of the tire as represented by the model's variables. The choice of parameters for fitting can be based on their relevance to the desired outcomes of the model, such as accurately predicting tire forces or behavior under various conditions.

The "updating the predefined tire model" may be done based on the fitted parameter(s). This update process fine-tunes the model to better match the observed data, thereby improving its predictive accuracy and relevance to real-world tire behavior. The fitted parameter(s) preferably represent effects related to the adhesion and/or stiffness of the tire. Adhesion effects pertain to the interaction between the tire and the road surface, crucial for understanding traction and slip characteristics. Stiffness relates to the tire's material and structural properties, affecting how it deforms and reacts under load. By focusing on these aspects, the updated model can provide nuanced insights into tire dynamics, particularly in terms of how these properties influence tire performance and vehicle handling.

In another aspect, the predefined tire model is based on an industry standard .tir file provided by the tire manufacturer.

In other words, to calculate the scale factor for known variables, the industry standard .tir file provided by the tire manufacturer may be used. The Magic Formula (MF) used by the .tir file may be refitted in a modified version to set the required scaling functions and parameters.

The "industry standard .tir file" is an industry-standard file format used to describe tire characteristics and models. These files are typically provided by tire manufacturers and contain detailed information about a tire's physical properties, performance data, and modeling parameters. Utilizing a .tir file ensures that the tire model is grounded in manufacturer-specific data, capturing the unique attributes of the tire in question.

The provided method may also include adapting or modifying the base tire model (derived from the .tir file) using a modified Magic Formula (MF). The Magic Formula is a widely recognized tire modeling approach that describes the tire forces and moments as functions of slip angle, slip ratio, vertical load, and other relevant variables. This empirical model, developed by Pacejka and others, is used for its ability to accurately capture the complex, nonlinear behaviors of tires under various conditions.

The adaptation or modification with the Magic Formula may be performed based on additional input or formulas provided by the tire manufacturer. This indicates a tailored approach where the manufacturer's insights into their tire's behavior are integrated into the modeling process, potentially refining, or extending the base model contained within the .tir file.

In another aspect, the method is executed in an online mode, in particular, during driving of the vehicle.

The "online mode execution" may define that the method is designed to be executed in real-time or "online" mode. This means that the processing and adaptation of the tire model are performed dynamically as data is being collected, without the need for preprocessing or offline analysis. This approach allows for immediate adjustments and optimizations to the tire model based on current driving conditions and sensor inputs.

The method's application is specifically intended to occur during the active driving of the vehicle. This implies that the adaptive tire model is continuously updated and refined as the vehicle is in motion, leveraging live data from the vehicle's sensors. This real-time adaptation ensures that the tire model remains accurate under a wide range of driving scenarios, including changes in road conditions, vehicle load, driving behavior, and environmental factors.

The emphasis on online mode and execution during driving defines the method's capacity to provide instantaneous feedback and adjustments to the vehicle's control systems. By operating in real-time, the adaptive tire model can enhance vehicle safety, performance, and efficiency, ensuring that the vehicle's handling characteristics are always optimized for the current driving conditions. This feature is particularly valuable in advanced driver-assistance systems (ADAS) and autonomous vehicle technologies, where the ability to rapidly respond to changing dynamics is critical.

In another aspect, the adaptive tire model is obtained individually for at least two tires of the vehicle.

The process involves creating and implementing the adaptive tire model on a per-tire basis for at least two tires on the vehicle. This individualized approach accounts for the distinct operational conditions and characteristics each tire experiences, such as differences in wear, loading conditions, and interactions with the road surface.

By adapting the model for each tire independently, the system can achieve a higher level of precision in vehicle dynamics control. This precision directly contributes to improved safety, handling, and stability, as the control system can make more informed decisions based on the specific state and behavior of each tire.

Tailoring the adaptive tire model to individual tires allows for optimized vehicle performance. It enables more accurate predictions and responses to changes in driving conditions, such as variations in road texture, inclines, and cornering forces, by adjusting control strategies for each tire based on its unique data.

The capability to obtain and update the adaptive tire model individually for at least two tires supports dynamic adjustment to real-time driving conditions.

In another aspect, the adaptive tire model is updated in a control loop of the vehicle.

The presented method provides a hybrid tire model that is intended for the use within a control loop of the vehicle controller.

The adaptive tire model may be incorporated directly into the vehicle's control loop. This means that the model is not static; rather, it is continuously updated based on real-time data and feedback from the vehicle's sensors and control systems. The control loop typically involves sensing vehicle dynamics, making decisions based on those inputs, and then actuating control mechanisms (like steering, braking, or power application) accordingly.

By updating the model within the control loop, the system ensures that the tire model remains accurate under varying conditions. This ongoing refinement process allows the model to adapt to changes in tire conditions (such as wear or temperature changes), driving behavior, and external environmental factors (such as road surface changes).

The dynamic updating of the tire model within the control loop contributes to improved vehicle performance, handling, and safety. It allows the control system to respond more effectively to the driving conditions by adjusting the vehicle's responses based on the most current and accurate tire model. This responsiveness may be used for advanced driver-assistance systems (ADAS) and autonomous vehicle technologies.

The continuous loop of sensing, modeling, and actuating enables the vehicle to maintain optimal traction and stability by adjusting to real-time feedback from the tires' interaction with the road.

In another aspect, there is provided a vehicle controller having at least one processor adapted to execute the presented method according to any one of its aspects.

The vehicle controller may be a TV controller and/or a TCS controller and/or an ABS controller and/or an ESP controller.

A "torque vectoring (TV) controller" may optimize the distribution of torque between the wheels on an axle (and, in some systems, across axles) to improve handling, traction, and stability. By adjusting the power sent to each wheel based on driving conditions and tire performance, TV enhances cornering and acceleration while reducing understeer or oversteer.

A "TCS controller (traction control system controller)" may be used to prevent wheel spin under acceleration by reducing engine power or applying brakes to specific wheels, ensuring optimal grip is maintained. TCS is particularly beneficial on slippery surfaces or during rapid acceleration, where tire slip is more likely.

An "ABS controller (anti-lock braking system controller)" may be used to prevent the wheels from locking up during braking, maintaining steering control and minimizing stopping distances. ABS modulates brake pressure to each wheel during a hard stop, based on feedback from wheel speed sensors, which is closely related to tire dynamics and slip characteristics.

An "ESP controller (Electronic Stability Program Controller)" is also known as Electronic Stability Control (ESC). The ESP controller enhances vehicle stability by detecting and reducing loss of traction (skidding). It applies the brakes to individual wheels and can reduce engine power to help steer the vehicle where the driver intends to go, effectively preventing oversteer or understeer.

In another aspect, there is provided a vehicle having at least two tires and such a vehicle controller or having such a system according to any one of its aspects.

The vehicle is equipped with at least two tires, thereby, representing a wide range of vehicles, especially from motorcycles to cars and larger vehicles. This broad applicability indicates the versatility of the adaptive tire model and control systems in enhancing vehicle performance and safety across different types of vehicles.

The vehicle is equipped with one or more advanced control systems, which may include a Torque Vectoring (TV) controller, Traction Control System (TCS) controller, Anti-lock Braking System (ABS) controller, and Electronic Stability Program (ESP) controller. These controllers may be integral to managing vehicle dynamics, ensuring optimal traction, stability, and safety under various driving conditions.

The vehicle's control systems utilize the adaptive tire model as part of their operational framework. This integration allows the controllers to adjust their responses based on real-time tire behavior and conditions, enhancing the effectiveness of traction control, braking, stability management, and torque distribution strategies.

By having such a system, the vehicle benefits from improved handling, safety, and efficiency. The adaptive tire model provides the controllers with accurate, up-to-date information on tire performance, enabling precise adjustments to vehicle dynamics in response to changing driving conditions, road surfaces, and tire states.

Advantageous aspects of the present disclosure are the subject-matter of the dependent claims. Any and all combinations of at least two features disclosed in the description, the claims, and/or the figures fall within the scope of the present disclosure. Naturally, the explanations given in connection with the aerodynamic unit equivalently relate to the vehicle according to the present disclosure without being mentioned redundantly in its/their context. In particular, linguistically common rephrasing and/or an analogous replacement of respective terms within the scope of common linguistic practice, in particular the use of synonyms backed by the generally recognized linguistic literature, are, of course, comprised by the content of the disclosure at hand without every variation having to be expressly mentioned.

All aspects and/or embodiments as described above may be combined as deemed fit by the skilled person. Further possible implementations of the invention also comprise not explicitly mentioned combinations of any features and/or embodiments that are described above or below with respect to the exemplary aspects and/or embodiments. In this case, a person skilled in the art will also add individual aspects as improvements or supplementations to the respective basic form of the invention.

"A(n)" in the present case should not necessarily be understood to be restrictive to exactly one element. Rather, a plurality of elements, such as, for example, two, three, or more, can also be provided. Any other numeral used here, too, should not be understood to the effect that there is a restriction to exactly the stated number of elements. Rather, numerical deviations upwards and downwards are possible, unless indicated to the contrary.

### BRIEF DESCRIPTION OF THE FIGURES

FIG. 1 shows a schematic block diagram of an aspect of the system.
FIG. 2 shows a schematic flow chart of an aspect of the method.
FIG. 3 shows data diagrams that visualize the data processing according to an aspect of the method.
FIG. 4 shows schematic look-up tables, in which data penalization according to an aspect of the method is applied.

### DETAILED DESCRIPTION OF THE INVENTION

The invention will now be described on the basis of the figures. It will be understood that the aspects and/or embodiments of the invention described herein are only examples and do not limit the protective scope of the claims in any way. The invention is defined by the claims and their equivalents. It will be understood that features of one aspect or embodiment of the invention can be combined with a feature of a different aspect or aspects and/or embodiments of the invention.

Unless indicated to the contrary, elements that are the same or functionally similarly have been given the same reference signs in the figures. It should also be noted that the illustrations in the figures are not necessarily true to scale.

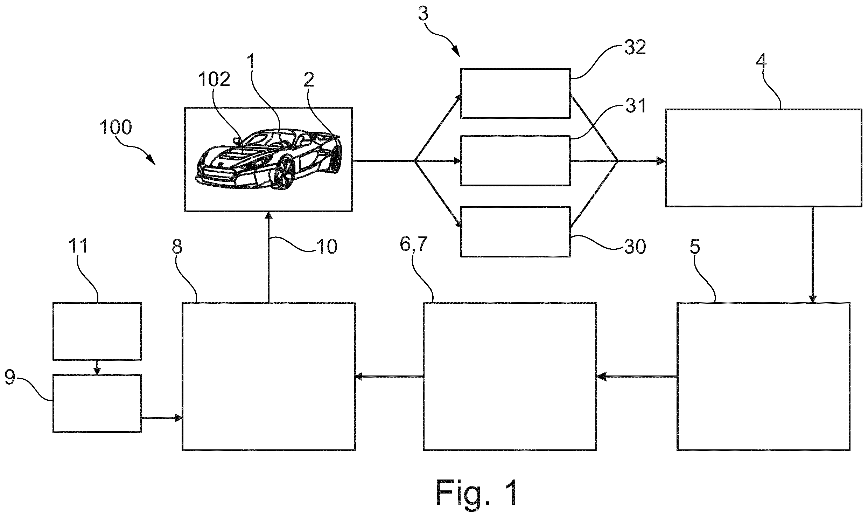

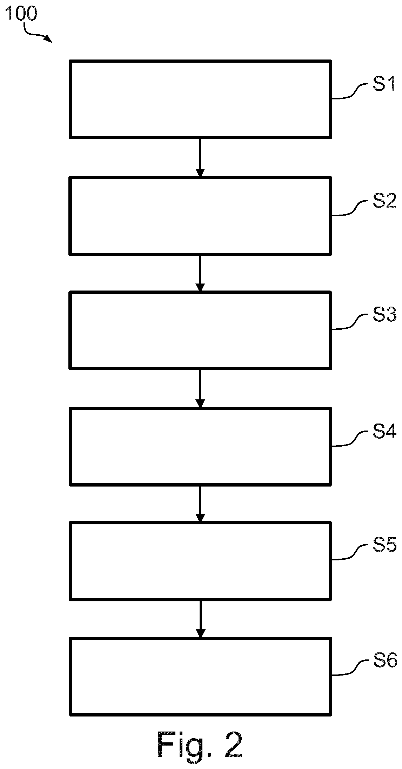

FIG. 1 shows system 100 for providing an adaptive tire model 10 for controlling a vehicle 1 and/or for providing tire-related information of the vehicle 1. The method is executed in an online mode, in particular, during driving of the vehicle 1. The vehicle 1 may be equipped with a vehicle controller 102 having at least one processor adapted to execute the presented method (see FIG. 2). The vehicle 1 may additionally or alternatively comprise the system 100. The vehicle 1 has at least two tires 2.

The system 100 comprises an estimator unit 4 configured for estimating a series of data points of forces and slips of a tire of the vehicle 1. The series of data points is preferably provided based on vehicle sensor data. The series of data points of forces and slips comprises vertical forces F_{z} and longitudinal forces Fₓ and lateral forces F_{y} at a point of contact of the tire with a road surface and a slip rate κ and a slip angle α of the tire. The vehicle sensor data may be provided by a vehicle sensor 3. The vehicle sensor data may comprise motor torque sensor data of an engine/motor control unit and/or wheel speed sensor data of a wheel speed sensor and/or suspension sensor data of a suspension sensor 30 and/or inertial measurement unit sensor data of an inertial measurement unit, IMU 31, and/or electric power assisted steering sensor data of an electric power assisted steering, EPAS, sensor 32.

The estimator unit 4 may be configured for estimating the vertical forces F_{z} based on the suspension sensor data and/or the inertial measurement unit sensor data. The estimator unit 4 may be configured for estimating the longitudinal forces Fₓ based on the motor sensor torque data and/or the inertial measurement unit sensor data. The estimator unit 4 may be configured for estimating the lateral forces F_{y} based on the EPAS sensor data and/or the inertial measurement unit sensor data. The estimator unit 4 may be configured for estimating longitudinal slip rate κ and/or lateral slip angle α based on the EPAS sensor data and/or the wheel speed sensor data and/or the inertial measurement unit sensor data.

The system 100 comprises a penalizer unit 5 configured for penalizing and/or excluding data points having a predefined dynamic behavior and/or an accuracy being lower than a predefined threshold from the series of data points to provide an adapted series of data points.

The penalizer unit 5 may be configured for calculating a penalty factor for each data point of the series of data points to evaluate the respective dynamic behavior of the tire 2 based on at least one threshold that is predefined based on a value of the series of data points

(for example, data points of α and/or κ) and/or a derivative (for example, ∂µ/∂α and/or ∂µ/∂κ) of the series of data points.

The penalizer unit 5 may be configured for penalizing data points corresponding to a low speed and/or a low acceleration of the vehicle 1, as at a low speed and/or a low acceleration of the vehicle 1, a respective accuracy of such data points may be low. For assessing whether a data point has a "low" accuracy, a value of the respective data point may be compared with the predefined threshold. The penalized data may not include relaxation of the data.

The system 100 comprises a normalizer unit 6 configured for normalizing the adapted series of data points to provide a normalized series of data points. Accounting for a dependence between variables by applying the corresponding scaling factors allows to reduce the variability of the data point series obtained, thus improving the accuracy of the fit.

The normalizer unit 6 may be configured for extracting variable dependencies between the variables of the multi-variable tire model. The dependence between variables preferably refers to how a variable can affect the friction value obtained in relation to the slip variable. This dependence can be considered linear or defined by a more complex function representing the scaling factor that has to be applied to the friction value to compensate for its influence. An example may be the vertical load, since at high vertical loads the friction is reduced. This dependence can be extended to other variables such as velocity, pressure or temperature.

The normalizer unit 6 may be configured for calculating scale factors for at least some of the variables based on at least one of the variable dependencies.

The normalizer unit 6 may be configured for normalizing the adapted series of data points based on the scale factors to compensate the variable dependencies. Thus, the adapted series of data points after normalization may refer to the normalized series of data points.

The system 100 comprises a compressing unit 7 configured for compressing the normalized data points to provide a compressed series of data points. This compressing reduces the number of data to be fitted, thus reducing the computational cost.

The compressing unit 7 may be configured for separating the normalized series of data points into lateral-related and longitudinal-related data points of the tire 2.

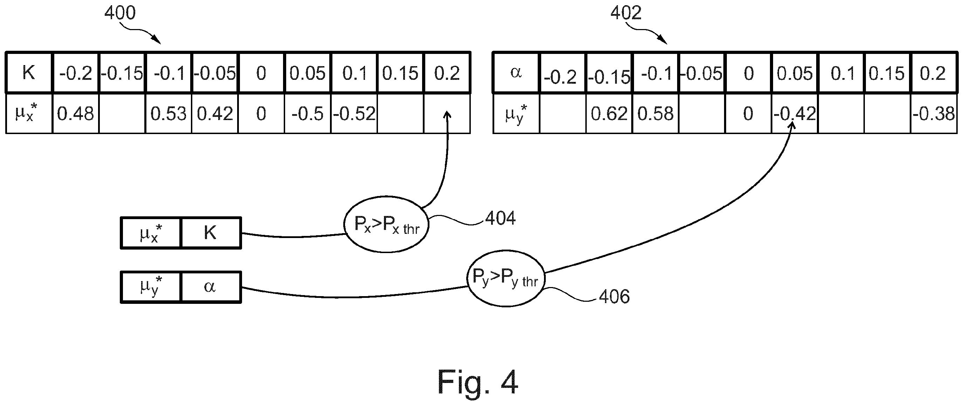

The compressing unit 7 may be configured for compressing the separated series of data points into a look-up table, as it is exemplarily shown in FIG. 4, to map the corresponding friction values µₓ = Fₓ/F_{z}; µ_{y} = F_{y}/F_{z} into discrete slip values κ; α. optionally applying a forgetting factor preferably to each data point or a predefined number of data points or series of data point to avoid compressing and/or adjusting of non-actual force and/or slip values.

The system 100 also comprises a fitting unit 8 configured for fitting the compressed series of data points with a predefined tire model 9 to obtain the adaptive tire model 10. As the fitting is only performed on a reduced number of parameters, the adjustment is faster and more efficient than if all the parameters of the model were fitted. The adaptive tire model 10 is obtained individually for at least two tires 2 of the vehicle 1. Furthermore, the adaptive tire model 10 is updated in a control loop of the vehicle 1.

The fitting unit 8 may be configured for applying a nonlinear regression on the compressed series of data points to fit at least one of the variables of the predefined tire model to the compressed series of data points. The nonlinear regression allows to fit the data on the compressed series of data points by correctly fitting the nonlinearities of the multi-variable tire model used.

The fitting unit 8 may be configured for updating the predefined tire model 9 based on the at least one fitted variable, the at least one fitted variable preferably represents effects of adhesion and/or stiffness of the tire. The fitting may include solving non-linear least squares problems. This may involve finding the minimum of a sum of squares of nonlinear functions.

The predefined tire model 9 is preferably based on a multi-variable tire model, preferably a Pacejka tire model, from which a predefined number of variables are used for the model fitting. The predefined tire model 9 is preferably based on a multi-variable tire model, preferably a Pacejka tire model, from which a predefined number of parameters are used for the online model fitting. The predefined tire model 9 parameters may thus be initialized in the tire model initialization 11.

FIG. 2 shows a schematic flowchart of a method for providing the adaptive tire model 10 for controlling the vehicle 1 and/or for providing tire-related information of the vehicle 1.

In any embodiment, the method can be carried out at least in part by the system 100, which for this purpose can comprise several components not shown in more detail, for example one or more provisioning devices and/or at least one evaluation and computing device. It is understood that the provisioning device may be formed together with the evaluation and computing device or may be different therefrom. Furthermore, the system 100 may comprise a storage device and/or an output device and/or a display device and/or an input device.

According to the invention, the preferably computer-implemented method comprises at least the following steps:

In a step S1, estimating a series of data points of forces and slips of the tire 2 of the vehicle 1 based on vehicle sensor data.

In a step S2, penalizing data points having a predefined dynamic behavior and/or an accuracy being lower than a predefined threshold from the series of data points to provide an adapted series of data points.

In an alternative or supplementary step S3 excluding data points having a predefined dynamic behavior and/or an accuracy being lower than a predefined threshold from the series of data points to provide an adapted series of data points.

In a step S4, normalizing the adapted series of data points to provide a normalized series of data points.

In a step S5, compressing the normalized series of data points to provide a compressed series of data points.

In a step S6, fitting the compressed series of data points with the predefined tire model 9 to obtain the adaptive tire model.

It is understood that the steps as well as further optional steps do not necessarily have to be carried out in the sequence shown but can also be carried out in a different sequence. Furthermore, further intermediate steps may be provided. Moreover, the individual steps may comprise one or more substeps without thereby leaving the scope of the method.

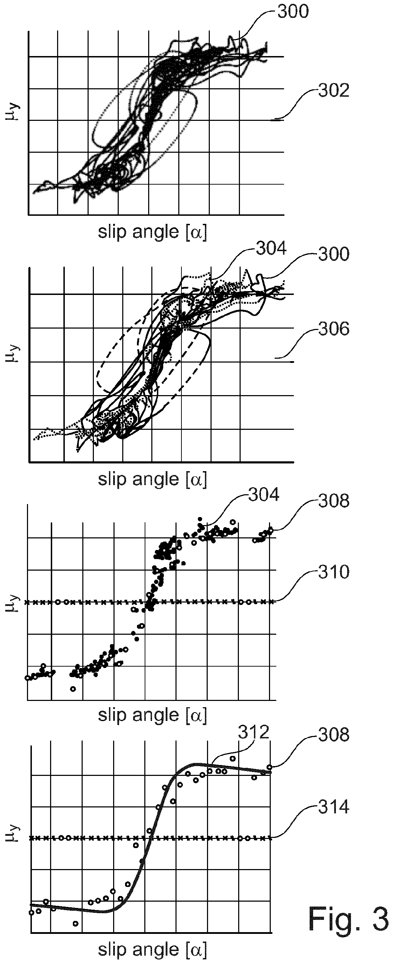

FIG. 3 visualizes a data flow / a data processing according to the presented method for providing the adaptive tire model 10 for controlling the vehicle 1 and/or for providing tire-related information of the vehicle 1. It is to be noted that the data flow/data processing shown in FIG. 3 is only for the lateral behavior of the tire (i.e., the lateral friction versus the slip angle). A similar data flow/data processing may exist for the longitudinal behavior (i.e., the longitudinal friction versus the slip ratio).

A series of data points 300 of forces and slips of a tire 2 of the vehicle 1 that is estimated based on vehicle sensor data is shown in graph 302. As detailed above, these series of data points 300 can be estimated by the estimator unit 4. Due to high dynamics and external dependencies the series of data points 300 shown in graph 302 are quite broadened. The series of data points 300 shown in graph 302 represent the "raw" (unprocessed) data depicted from the vehicle sensor(s) 3.

To remove the non-stationary data from the series of data points 300, a penalty or penalty factor may be applied and/or certain data points may be removed from the initial series of data points 300. Furthermore, external dependencies are compensated by normalizing the (already) penalized series of data points. A penalized and normalized series of data points 304 is shown as dotted lines in graph 306 (still together with the initial series of data points 300).

Due to the large number of data points and their random distribution, the penalized and normalized series of data points 304 is then compressed to a finite number of data points 308, wherein the finite number of data points may be preset. The compressed series of data points 308 is shown in graph 310 (still together with the penalized and normalized series of data points 304).

The compressed series of data points 308 is then fitted with the proposed predefined and optimized/adaptive tire model 10. A fitted series of data points (or the fitting curve) 312 is shown in graph 314.

FIG. 4 shows schematic look-up tables 400, 402, in which data penalization and compression according to an aspect of the method is applied.

The look-up table 400 correlates the longitudinal slip rate κ with the longitudinal friction coefficient µₓ.

The look-up table 402 corresponds the slip angle α with the lateral friction coefficient µ_{y}.

As schematically shown for the look-up tables 400, 402, a respective penalty factor 404, 406 may be applied for each data correlation (κ | µₓ; α | µ_{y}) to penalize certain data points and/or to remove certain data points and/or to create new data points µₓ^{*}, µ_{y}^{*} for the longitudinal and lateral friction coefficients µₓ, µ_{y}.

In the shown example, the penalty factor 404 represents a query whether a certain data point or data value Pₓ > Px,threshold.

In the shown example, the penalty factor 406 represents a query whether a certain data point or data value P_{y} > P_{y,threshold}.

The normalized series of data points that has not been penalized and compressed is then ready for the fitting procedure that has been explained hereinbefore. For this, preferably, a memory buffer is filled for each tire (for example for a four-tire vehicle: for the front left tire, for the front right tire, for the rear left tire and for the rear right tire) and separated into longitudinal and lateral components. From there, the data is compressed into a look-up table that maps the obtained force into discrete slip values.

### LIST OF REFERENCE SIGNS

- 1: vehicle
- 2: tire
- 3: vehicle sensor
- 4: estimator unit
- 5: penalizer unit
- 6: normalizer unit
- 7: compressing unit
- 8: fitting unit
- 9: predefined tire model
- 10: optimized/adaptive tire model
- 11: tire model initialization method
- 30: suspension sensor
- 31: inertial measurement unit
- 32: electric power assisted steering sensor
- 100: system
- 102: vehicle controller
- 300: (initial) series of data points
- 302: graph
- 304: penalized and normalized series of data points
- 306: graph
- 308: compressed series of data points
- 310: graph
- 312: fitted series of data points
- 314: graph
- 400: look-up table
- 402: look-up table
- 404: penalty factor
- 406: penalty factor
- S 1: method step of estimating
- S2: method step of penalizing
- S3: method step of excluding
- S4: method step of normalizing
- S5: method step of compressing
- S6: method step of fitting

- F_{z}: vertical forces
- Fₓ: longitudinal forces
- F_{y}: lateral forces
- α: slip angle
- κ: slip rate
- µₓ: friction value
- µ_{y}: friction value

## Claims

1. A method for providing an adaptive tire model (10) for controlling a vehicle (1) and/or for providing tire-related information of the vehicle (1), the method comprising the steps of:
- estimating (S1) a series of data points of forces and slips of a tire (2) of the vehicle (1) based on vehicle sensor data;
- penalizing (S2) and/or excluding (S3) data points having a predefined dynamic behavior and/or an accuracy being lower than a predefined threshold from the series of data points to provide an adapted series of data points;
- normalizing (S4) the adapted series of data points to provide a normalized series of data points;
- compressing (S5) the normalized series of data points to provide a compressed series of data points; and
- fitting (S6) the compressed series of data points with a predefined tire model (9) to obtain the adaptive tire model (10).

2. The method of claim 1, wherein the series of data points of forces and slips comprises vertical forces (F_{z}) and longitudinal forces (Fₓ) and lateral forces (F_{y}) at a point of contact of the tire with a road surface and a slip rate (κ) and a slip angle (α) of the tire.

3. The method of claim 1 or 2, wherein the vehicle sensor data comprise motor torque sensor data of an engine control unit, preferably an electric inverter, and/or wheel speed sensor data of a wheel speed sensor and/or suspension sensor data of a suspension sensor and/or inertial measurement unit sensor data of an inertial measurement unit, IMU, and/or electric power assisted steering sensor data of an electric power assisted steering, EPAS, sensor.

4. The method of claim 2 and 3, wherein the estimating (S1) comprises:
- estimating vertical forces (F_{z}) based on the suspension sensor data and/or the inertial measurement unit sensor data; and/or
- estimating longitudinal forces (Fₓ) based on the motor sensor torque data and/or the inertial measurement unit sensor data; and/or
- estimating lateral forces (F_{y}) based on the EPAS sensor data and/or the inertial measurement unit sensor data; and/or
- estimating longitudinal slip rate (κ) and/or lateral slip angle (α) based on the EPAS sensor data and/or the wheel speed sensor data and/or the inertial measurement unit sensor data.

5. The method of any one of preceding claims, wherein the penalizing (S2) comprises:
- calculating a penalty factor for each data point of the series of data points to evaluate the respective dynamic behavior of the tire (2) based on at least one threshold that is predefined based on a value of the series of data points and/or a derivative of the series of data points; and/or
- penalizing data points corresponding to a low speed and/or a low acceleration of the vehicle (1) and thereby having a respective accuracy being lower than the predefined threshold.

6. The method of any one of preceding claims, wherein the predefined tire model (9) is based on a multi-variable tire model, preferably a Pacejka tire model, from which a predefined number of variables are used for the model fitting.

7. The method of claim 6, wherein the normalizing (S4) comprises:
- extracting variable dependencies between the variables of the multi-variable tire model;
- calculating scale factors for at least some of the variables based on at least one of the variable dependencies; and
- normalizing the adapted series of data points based on the scale factors to compensate the variable dependencies.

8. The method of any one of preceding claims, wherein the compressing (S5) comprises:
- separating the normalized series of data points into lateral-related and longitudinal-related data of the tire (2);
- compressing the separated series of data points into a look-up table to map the corresponding friction values (µₓ = Fₓ/F_{z}; µ_{y} = F_{y}/F_{z}) into discrete slip values (κ; α); and
- optionally applying a forgetting factor to avoid compressing and/or adjusting of non-actual force and/or slip values.

9. The method of any one of preceding claims, wherein the fitting (S6) comprises:
- applying a nonlinear regression on the compressed series of data points to fit at least one of the variables of the predefined tire model to the compressed series of data points; and
- updating the predefined tire model based on the at least one fitted variable, the at least one fitted variable preferably represents effects of adhesion and/or stiffness of the tire.

10. The method of any one of preceding claims, wherein the method is executed in an online mode, in particular, during driving of the vehicle (1).

11. The method of any one of preceding claims, wherein the adaptive tire model (10) is obtained individually for at least two tires (2) of the vehicle (1).

12. The method of any one of preceding claims, wherein the adaptive tire model (10) is updated in a control loop of the vehicle (1).

13. A vehicle controller (102) having at least one processor adapted to execute a method of any one of claims 1 to 12.

14. A system (100) for providing an adaptive tire model (10) for controlling a vehicle (1) and/or for providing tire-related information of the vehicle (1), the system (100) comprising:
- an estimator unit (4) configured for estimating a series of data points of forces and slips of a tire of the vehicle (1) based on vehicle sensor data;
- a penalizer unit (5) configured for penalizing and/or excluding data points having a predefined dynamic behavior and/or an accuracy being lower than a predefined threshold from the series of data points to provide an adapted series of data points;
- a normalizer unit (6) configured for normalizing the adapted series of data points to provide a normalized series of data points;
- a compressing unit (7) configured for compressing the normalized series of data points to provide a compressed series of data points; and
- a fitting unit (8) configured for fitting the compressed series of data points with a predefined tire model (9) to obtain the adaptive tire model (10).

15. A vehicle (1) having at least two tires (2) and a vehicle controller (102) according to claim 13 or a system (100) according to claim 14.
